# EUROPEAN PATENT APPLICATION

(11) **EP 4 354 316 A1**
(43) Date of publication of application: **17.04.2024**
(21) Application number: 22857754.0
(22) Date of filing: 15.08.2022
(51) Int. Cl.: G06F 16/27, G06Q 40/04

(54) **BLOCKCHAIN GENERATION METHOD AND APPARATUS**

(30) Priority: 18.08.2021 CN 202110949570
(71) Applicant: Huawei Technologies Co., Ltd., Shenzhen, Guangdong 518129 (CN)
(72) Inventor: WANG, Donghui, Shenzhen, Guangdong 518129 (CN); CHEN, Jing, Wuhan, Hubei 430072 (CN); LIU, Fei, Shenzhen, Guangdong 518129 (CN); LI, Kai, Wuhan, Hubei 430072 (CN)
(74) Representative: Körber, Martin Hans
(86) International application number: PCT/CN2022/112541
(87) International publication number: WO 2023/020442

(57) **Abstract**

A blockchain generation method and apparatus are provided, and the method includes: A first blockchain node determines a block type of a first block (301), and determines the first block based on the block type of the first block (302). Then, the first blockchain node sends the first block to a second blockchain node (303). Then, the second blockchain node determines the block type of the first block (304). Then, the second blockchain node performs block verification on the first block based on the block type of the first block (305). After verification succeeds, the second blockchain node updates a first blockchain (306), where the block type is a first type or a second type. The first blockchain node and the second blockchain node are configured to maintain the first blockchain, and the first blockchain includes at least one first-type block and at least one second-type block. According to the blockchain generation method and apparatus, scalability of a blockchain and a transaction throughput of the blockchain are improved, thereby improving performance of the blockchain.

## Description

### CROSS-REFERENCE TO RELATED APPLICATIONS

This application claims priority to Chinese Patent Application No. 202110949570.5, filed with the China National Intellectual Property Administration on August 18, 2021 and entitled "BLOCKCHAIN GENERATION METHOD AND APPARATUS", which is incorporated herein by reference in its entirety.

### TECHNICAL FIELD

This application relates to the field of communication technologies, and in particular, to a blockchain generation method and apparatus.

### BACKGROUND

As a distributed ledger technology, a blockchain technology has been applied to many fields because the blockchain technology is open and transparent, and cannot be tampered with. With sharp increase of a quantity of users and access requirements, a processing speed of a blockchain becomes a performance bottleneck, and scalability restricts application and promotion of the blockchain technology. How to improve scalability of a blockchain has become a hot issue concerned at present.

### SUMMARY

This application provides a blockchain generation method and apparatus, to improve scalability of a blockchain, and improve performance of the blockchain.

According to a first aspect, this application provides a blockchain generation method. The method may include: A first blockchain node determines a block type of a first block, and determines the first block based on the block type of the first block. Then, the first blockchain node sends the first block to a second blockchain node. The block type is a first type or a second type, the first blockchain node and the second blockchain node are configured to maintain a first blockchain, and the first blockchain includes at least one first-type block and at least one second-type block.

According to the foregoing method, a blockchain may include at least one first-type block and at least one second-type block, to improve scalability of the blockchain and a transaction throughput of the blockchain, and further improve performance of the blockchain.

In a possible design, the first blockchain node determines first information, and obtains a block header of the first block based on the first information. The first information includes one or more of the following information: preposition block information of the first block, second-type block reference information, block confirmation information, transaction information, or a block confirmation period. In this way, the first blockchain node may accurately determine the block header of the first block, to accurately determine the first block subsequently.

In a possible design, a method in which the first blockchain node obtains the block header of the first block based on the first information may be: The first blockchain node performs one or more of the following processing on the first information: generating a first Merkle tree based on the transaction information or generating a second Merkle tree based on the second-type block reference information. The first blockchain node performs a hash operation on at least one of the first Merkle tree, the preposition block information, or the second Merkle tree, to obtain a third Merkle tree. Finally, the first blockchain node obtains the block header of the first block based on a root of the third Merkle tree. In this way, the first blockchain node may accurately obtain the block header of the first block based on the first information.

In a possible design, a method in which the first blockchain node determines the block type of the first block may be: The first blockchain node performs a hash operation on the block header of the first block, and determines the block type of the first block based on a result of the hash operation. In this way, the first blockchain node may determine, based on the result of the hash operation performed on the block header of the first block, whether the block type of the first block is the first type or the second type.

In a possible design, a method in which the first blockchain node determines the block type of the first block based on the result of the hash operation may be: When the result of the hash operation is less than or equal to a first threshold, the first blockchain node determines that the block type of the first block is the first type. When the result of the hash operation is greater than a first threshold, and a first hash value is less than a second threshold, the first blockchain node determines that the block type of the first block is the second type, where the first threshold is less than the second threshold.

According to the foregoing method, the first blockchain node may determine, based on the result of the hash operation, whether the block type of the first block is the first type or the second type, so that the first block is subsequently determined based on the block type of the first block.

In a possible design, a method in which the first blockchain node determines the first block based on the block type of the first block may be: When the block type of the first block is the second type, the first block includes the transaction information and the first Merkle tree, where the first Merkle tree is determined based on the transaction information. When the block type of the first block is the first type, the first block includes one or more of the following information: the preposition block information of the first block, the second-type block reference information, or the second Merkle tree, where the second Merkle tree is determined based on the second-type block reference information. In this way, the first blockchain node may fill the first block with content matching the block type of the first block, to obtain the first block.

In a possible design, the first-type block uses first consensus, the second-type block uses second consensus, and the first-type block references the second-type block. In this way, the first-type block and the second-type block may be obtained in a method of using same consensus or in a method of using different consensus according to a situation, to improve scalability performance of the blockchain.

According to a second aspect, this application provides a blockchain generation method. The method may include: A second blockchain node receives a first block from a first blockchain node, and determines a block type of the first block. Then, the second blockchain node performs block verification on the first block based on the block type of the first block, and updates a first blockchain after block verification succeeds. The block type is a first type or a second type, the first blockchain node and the second blockchain node are configured to maintain the first blockchain, and the first blockchain includes at least one first-type block and at least one second-type block.

According to the foregoing method, a blockchain may include at least one first-type block and at least one second-type block, to improve scalability of the blockchain and a transaction throughput of the blockchain, and further improve performance of the blockchain.

In a possible design, a method in which the second blockchain node determines the block type of the first block may be: The second blockchain node determines a hash value of the first block. When the hash value of the first block is less than or equal to a first threshold, the second blockchain node determines that the block type of the first block is the first type. When the hash value of the first block is greater than a first threshold, and a first hash value is less than a second threshold, the second blockchain node determines that the block type of the first block is the second type, where the first threshold is less than the second threshold. In this way, the second blockchain node may accurately determine the block type of the first block based on the hash value of the first block, to perform subsequent block verification on the first block based on the determined block type.

In a possible design, a method in which the second blockchain node determines the block type of the first block may be: The second blockchain node receives the block type of the first block from the first blockchain node. In this way, the second blockchain node may obtain the block type of the first block from the first blockchain node, to perform subsequent block verification on the first block based on the determined block type.

In a possible design, when the block type of the first block is the second type, that the second blockchain node performs block verification on the first block based on the block type of the first block may include one or more of the following: verifying whether a proof of membership of transaction information in the first block is correct; verifying whether a transaction in the first block is valid; verifying whether a first Merkle tree in the first block is correct; or verifying whether a hash value of a block header of the first block is correct. In this way, the second blockchain node may verify the first block based on a verification manner of the second-type block.

In a possible design, when the block type of the first block is the first type, that the second blockchain node performs block verification on the first block based on the block type of the first block may include one or more of the following: verifying whether a proof of membership of second-type block reference information in the first block is correct; verifying whether a proof of membership of block confirmation information in the first block is correct; verifying whether a proof of membership of a preposition block of the first block is correct; or verifying whether a hash value of a block header of the first block is correct. In this way, the second blockchain node may verify the first block based on a verification manner of the first-type block.

In a possible design, when the block type of the first block is the first type, a method in which the second blockchain node performs block verification on the first block based on the block type of the first block may be: The second blockchain node verifies whether a second-type block referenced by the first block is correct. In this way, the second blockchain node may verify the first block based on a verification manner of the first-type block.

In a possible design, when the block type of the first block is the second type, after block verification succeeds, the second blockchain node stores the first block in a local second-type block pool, where a second-type block included in the second-type block pool is not referenced by any first-type block. In this way, the first-type block may subsequently reference the second-type block in the second-type block pool.

According to a third aspect, this application further provides a blockchain generation apparatus. The blockchain generation apparatus may be a first blockchain node, and the blockchain generation apparatus has a function of implementing the method in the foregoing first aspect or the possible design examples of the first aspect. The function may be implemented by hardware, or may be implemented by hardware executing corresponding software. The hardware or the software includes one or more modules corresponding to the foregoing function.

In a possible design, a structure of the blockchain generation apparatus includes a communication unit and a processing unit. These units may perform corresponding functions in the foregoing first aspect or the possible design examples of the first aspect. For details, refer to the detailed descriptions in the method examples. This is not described herein again.

In a possible design, the structure of the blockchain generation apparatus includes a communication interface and a processor, and optionally further includes a memory. The communication interface is configured to send and receive a block, and is configured to communicate and interact with another device in a system. The processor is configured to support the blockchain generation apparatus in performing the corresponding function in the foregoing first aspect or the possible design examples of the first aspect. The memory is coupled to the processor, and stores program instructions and data that are necessary for the blockchain generation apparatus.

According to a fourth aspect, this application further provides a blockchain generation apparatus. The blockchain generation apparatus may be a second blockchain node, and the blockchain generation apparatus has a function of implementing the method in the foregoing second aspect or the possible design examples of the second aspect. The function may be implemented by hardware, or may be implemented by hardware executing corresponding software. The hardware or the software includes one or more modules corresponding to the foregoing function.

In a possible design, a structure of the blockchain generation apparatus includes a communication unit and a processing unit. These units may perform corresponding functions in the foregoing second aspect or the possible design examples of the second aspect. For details, refer to the detailed descriptions in the method examples. This is not described herein again.

In a possible design, the structure of the blockchain generation apparatus includes a communication interface and a processor, and optionally further includes a memory. The communication interface is configured to send and receive a block, and is configured to communicate and interact with another device in a system. The processor is configured to support the blockchain generation apparatus in performing the corresponding function in the foregoing second aspect or the possible design examples of the second aspect. The memory is coupled to the processor, and stores program instructions and data that are necessary for the blockchain generation apparatus.

According to a fifth aspect, an embodiment of this application provides a system, which may include the first blockchain node and the second blockchain node that are mentioned above.

According to a sixth aspect, an embodiment of this application provides a computer-readable storage medium. The computer-readable storage medium stores program instructions, and when the program instructions are run on a computer, the computer is enabled to perform the method in the first aspect and any possible design of the first aspect or the second aspect and any possible design of the second aspect in embodiments of this application. For example, the computer-readable storage medium may be any usable medium accessible to the computer. The following provides an example but does not impose a limitation. The computer-readable medium may include a non-transient computer-readable medium, a random access memory (random access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be used to carry or store expected program code in a form of an instruction or a data structure and can be accessed by the computer.

According to a seventh aspect, an embodiment of this application provides a computer program product including computer program code or instructions. When the computer program product runs on a computer, the computer is enabled to implement the method in the foregoing first aspect or any possible design of the first aspect, or in the foregoing second aspect or any possible design of the second aspect.

According to an eighth aspect, this application further provides a chip, including a processor. The processor is coupled to a memory, and is configured to read and execute program instructions stored in the memory, so that the chip implements the method in the foregoing first aspect or any possible design of the first aspect, or in the foregoing second aspect or any possible design of the second aspect.

For each of the third aspect to the eighth aspect and a technical effect that may be achieved by the aspect, refer to the foregoing descriptions of the technical effect that may be achieved in the first aspect or the possible solutions in the first aspect, or in the second aspect or the possible solutions in the second aspect. Details are not described herein again.

### BRIEF DESCRIPTION OF DRAWINGS

FIG. 1 is a schematic diagram of an architecture of a blockchain network according to this application;
FIG. 2 is a schematic diagram of an underlying architecture of a blockchain according to this application;
FIG. 3 is a flowchart of a blockchain generation method according to this application;
FIG. 4 is a schematic diagram of a first blockchain according to this application;
FIG. 5 is a schematic flowchart of generating a first blockchain according to this application;
FIG. 6 is a schematic diagram of a structure of a blockchain generation apparatus according to this application; and
FIG. 7 is a diagram of a structure of a blockchain generation apparatus according to this application.

### DESCRIPTION OF EMBODIMENTS

The following further describes in detail this application with reference to the accompanying drawings.

Embodiments of this application provide a blockchain generation method and apparatus to improve scalability of a blockchain and performance of the blockchain. The method and the apparatus in this application are based on a same technical concept. Because problem-resolving principles of the method and the apparatus are similar, mutual reference may be made to implementations of the apparatus and the method, and repeated parts are not described.

In the descriptions of this application, terms such as "first" and "second" are only for distinction and description, but cannot be understood as indicating or implying relative importance, or as indicating or implying a sequence.

In the descriptions of this application, "at least one (piece)" means one (piece) or more (pieces), and "a plurality of (pieces)" means two (pieces) or more than two (pieces).

To describe technical solutions in embodiments of this application more clearly, the following describes, in detail with reference to the accompanying drawings, the blockchain generation method and apparatus provided in embodiments of this application.

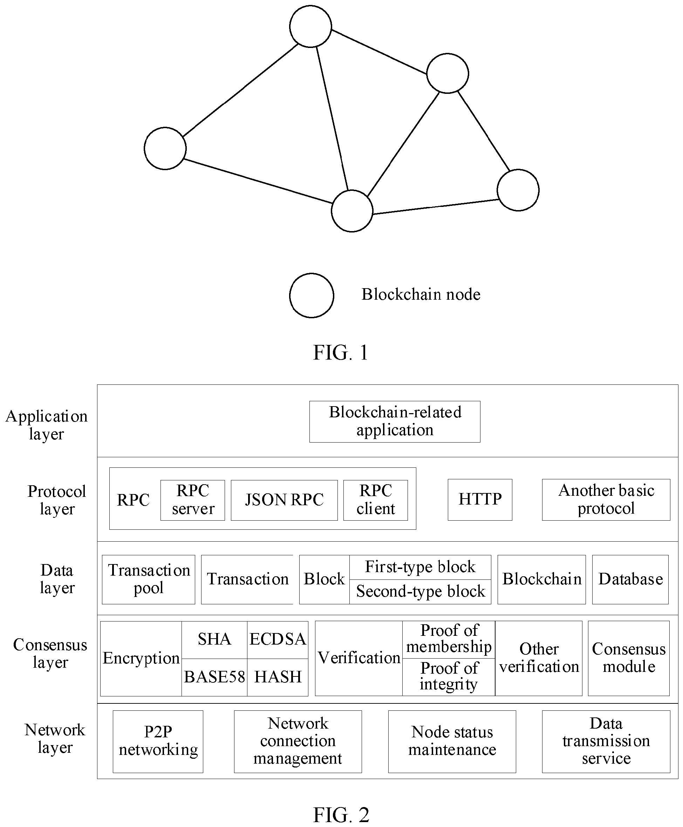

FIG. 1 is a schematic diagram of an architecture of a blockchain network to which an embodiment of this application is applicable. As shown in FIG. 1, the blockchain network may include a plurality of blockchain nodes. After generating a block, at least one blockchain node broadcasts the block. After receiving the block, another blockchain node performs block verification on the block. After verification succeeds, a local blockchain is updated. Optionally, the blockchain node that generates the block may also be referred to as a competitive miner, and the blockchain node that receives the block may be referred to as another miner. It should be understood that the foregoing names are merely examples. This is not limited in this application.

Any blockchain node may be but is not limited to a server, a personal computer (personal computer, PC), a network device, or a terminal device. Alternatively, any blockchain node may be a processor, a chip, or a functional module in the foregoing listed device.

For example, the method in embodiments of this application is applicable to existing 4G and 5G wireless communication systems and a future wireless communication system.

The network device is a device having a wireless transceiver function or a chip that can be disposed in the network device. The network device includes but is not limited to: an evolved NodeB (evolved NodeB, eNB), a base station (generation NodeB, gNB), a radio network controller (radio network controller, RNC), a NodeB (NodeB, NB), abase station controller (base station controller, BSC), abase transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), a satellite, a high altitude platform station, an unmanned aerial vehicle, and the like. The network device may alternatively be a network node that forms a gNB or a transmission point, for example, a baseband unit (BBU), a distributed unit (distributed unit, DU), or a network device that undertakes a base station function in a communication system.

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (tablet computer), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a smart wearable device (such as smart glasses, a smart watch, or a smart headset), a wireless terminal in a smart home (smart home), an unmanned aerial vehicle, or the like. The terminal device may alternatively be a chip, a chip module (or a chip system), or the like that can be disposed in the foregoing device. An application scenario is not limited in embodiments of this application. A terminal device having the wireless transceiver function and a chip that can be disposed in the terminal device are collectively referred to as a terminal device in this application.

It should be noted that a quantity of blockchain nodes in the blockchain network shown in FIG. 1 is merely an example. It should be understood that more or fewer blockchain nodes may further be included. This is not limited in this application.

It should be noted that a structure of the schematic diagram of the structure of the blockchain network shown in FIG. 1 is also merely an example, and another layout structure may further exist between the blockchain nodes. This is not limited in this application.

FIG. 2 is a schematic diagram of an underlying architecture of a blockchain to which a blockchain generation method is applicable according to an embodiment of this application. As shown in FIG. 2, the underlying architecture of the blockchain may be a layered architecture. For example, the underlying architecture of the blockchain may include a network layer, a consensus layer, a data layer, a protocol layer, and an application layer. Specifically,
the network layer may also be referred to as a peer to peer (peer to peer, P2P) network layer, and may include the following functional modules: P2P networking, network connection management, node status maintenance, and a data transmission service. A main purpose of the network layer is to implement information interaction between blockchain nodes. A blockchain network is a P2P network. Each blockchain node can receive information and generate information. The blockchain nodes keep communication by maintaining a common blockchain. In the blockchain network, each blockchain node may create a new block. After the new block is created, another blockchain node is notified in a broadcast manner, and the another blockchain node verifies the blockchain node in turn. After verification succeeds, the new block is added to the blockchain.

The consensus layer enables highly dispersed nodes to efficiently reach consensus on validity of block data in a decentralized system. Commonly used consensus mechanisms in a blockchain mainly include three types: a proof of work, a proof of stake, and a delegated proof of stake. For example, in this application, the consensus layer may implement the foregoing functions by using an encryption module, a verification module, and a consensus module. An encryption method used by the encryption module may include but is not limited to a secure hash algorithm (secure hash algorithm, SHA), a BASE58 encoding manner, an elliptic curve digital signature algorithm (elliptic curve digital signature algorithm, ECDSA), a hash (HASH) algorithm, and the like. The verification module may perform a proof of membership, a proof of integrity, and other verification. The other verification is, for example, nonce verification and hash verification of a block header.

A main role of the data layer is to design a block status and a blockchain status, that is, to describe a physical form of a blockchain technology. The data layer includes a transaction pool, a transaction, a block, a blockchain, and a database. A sequence of establishing the data layer is as follows: A start block that is first established is referred to as a "genesis block", and then blocks that are created under a same rule and have a same specification are connected in sequence via a chain structure to form a main chain. As running time becomes longer, new blocks are continuously added to the main chain after passing verification. Each block also includes many technologies, for example, a timestamp technology, which is used to ensure that each block can be connected in a time sequence; for another example, a hash function, which can prevent transaction information from being easily tampered with. In this application, blocks may include a first-type block and a second-type block. For descriptions of a first type and a second type, refer to detailed descriptions of the following method embodiments. Details are not described herein.

The protocol layer includes a plurality of protocol modules supported by a blockchain, for example, a remote procedure call (remote procedure call, RPC), a hypertext transport protocol (hypertext transport protocol, HTTP), and another basic protocol. The RPC includes an RPC server (RPC server), a JavaScript-based lightweight data exchange format (JavaScript object notation, JSON) RPC, and an RPC client (RPC client). The another basic protocol may include a user datagram protocol (user datagram protocol, UDP), a transmission control protocol (transmission control protocol, TCP), and/or the like.

The application layer encapsulates various application scenarios and cases of a blockchain. The application layer includes a blockchain-related application, for example, a blockchain-based cross-border payment platform.

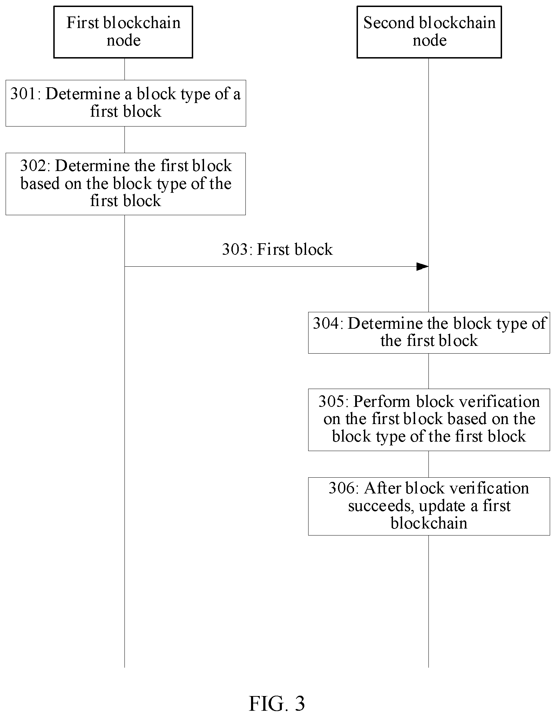

Based on the foregoing descriptions, the following describes in detail the blockchain generation method provided in embodiments of this application. The blockchain generation method provided in embodiments of this application may be applied to the blockchain network shown in FIG. 1 and the underlying architecture of the blockchain shown in FIG. 2. Refer to FIG. 3. A detailed procedure of the blockchain generation method provided in embodiments of this application may include the following steps.

Step 301: A first blockchain node determines a block type of a first block, where the block type may be a first type or a second type.

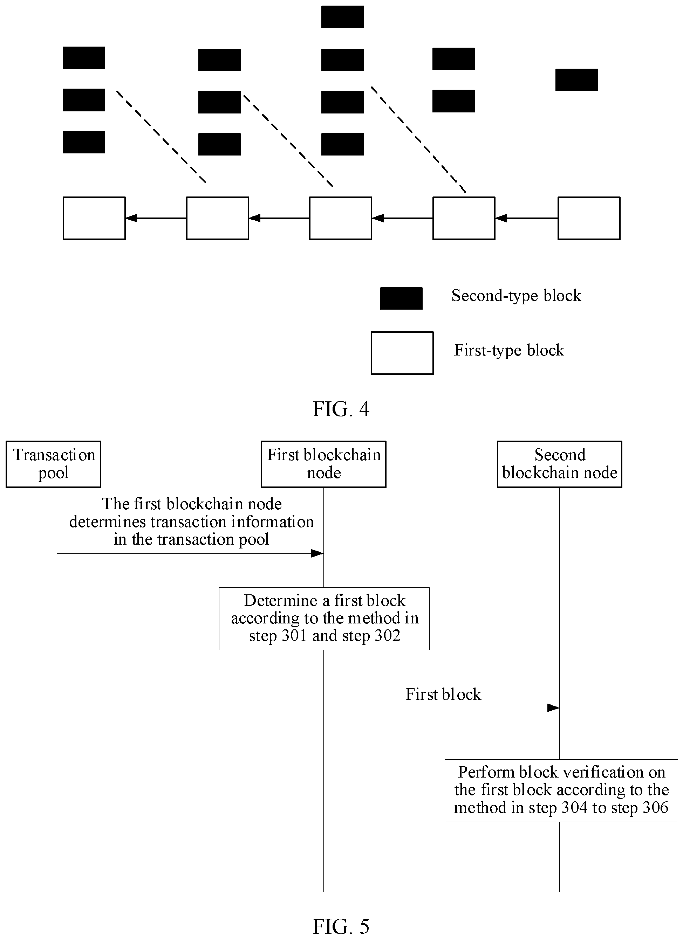

The first blockchain node is configured to maintain a first blockchain, and the first blockchain may include at least one first-type block and at least one second-type block. For example, the first blockchain may be as shown in FIG. 4. FIG. 4 shows the first blockchain including a plurality of first-type blocks and a plurality of second-type blocks. It should be understood that, this is not intended to limit this application.

For example, the first-type block may be referred to as a strong block, and the second-type block may be referred to as a weak block.

In an optional implementation, the first-type block may use first consensus, the second-type block may use second consensus, and the first-type block references the second-type block.

For example, both the first consensus and the second consensus may be proof-of-work consensus. Alternatively, the first consensus may be proof-of-work consensus, and the second consensus may be consensus other than the proof-of-work consensus, for example, proof-of-stake consensus or delegated-proof-of-stake consensus. Alternatively, the first consensus may be consensus other than proof-of-work consensus, for example, proof-of-stake consensus or delegated-proof-of-stake consensus, and the second consensus may be the proof-of-work consensus. Alternatively, both the first consensus and the second consensus may be consensus other than proof-of-work consensus, for example, proof-of-stake consensus or delegated-proof-of-stake consensus.

In an optional implementation, the first blockchain node determines first information, and obtains a block header of the first block based on the first information. The first information may include one or more of the following information: preposition block information of the first block, second-type block reference information, block confirmation information, transaction information, or a block confirmation period.

Optionally, the preposition block information of the first block may include the following two cases.

Case a1: The preposition block information of the first block includes information (for example, a hash value) about a previous first-type block.

Case a2: The preposition block information of the first block includes information (for example, hash values of blocks) about a previous first-type block and a second-type block referenced by the previous first-type block.

In an example, the information about the second-type block referenced by the previous first-type block in the case a2 is included in the previous first-type block. Therefore, regardless of the foregoing case a1 or case a2, the first blockchain node may directly use the preposition block information of the first block in a process of obtaining the block header of the first block based on the first information. For example, a corresponding method in which the first blockchain node obtains the block header of the first block based on the first information may be: The first blockchain node performs one or more of the following processing on the first information: generating a first Merkle tree based on the transaction information or generating a second Merkle tree based on the second-type block reference information. The first blockchain node performs a hash operation on at least one of the first Merkle tree, the preposition block information, or the second Merkle tree, to obtain a third Merkle tree. Finally, the first blockchain node obtains the block header of the first block based on a root of the third Merkle tree.

In another example, in a process of obtaining the block header of the first block based on the first information, the first blockchain node may construct a Merkle tree based on the preposition block information of the first block. For example, a corresponding method in which the first blockchain node obtains the block header of the first block based on the first information may be: The first blockchain node performs one or more of the following processing on the first information: generating a first Merkle tree based on the transaction information, generating a fourth Merkle tree based on the preposition block information, or generating a second Merkle tree based on the second-type block reference information. The first blockchain node performs a hash operation on at least one of the first Merkle tree, the fourth Merkle tree, or the second Merkle tree, to obtain a third Merkle tree. Finally, the first blockchain node obtains the block header of the first block based on a root of the third Merkle tree.

It should be noted that, in the method, when the preposition block information is subject to the case a1, the fourth Merkle tree includes information about only one root node. When the preposition block information is subject to the case a2, when the information about the second-type block referenced by the previous first-type block is included in the previous first-type block, the fourth Merkle tree includes information about only one root node; or when the information about the second-type block referenced by the previous first-type block is not included in the previous first-type block, the fourth Merkle tree includes information about a plurality of nodes.

For example, the first Merkle tree may also be referred to as a transaction Merkle tree (transaction Merkle tree, TrMT), the second Merkle tree may also be referred to as a second-type block reference tree or may also be referred to as a weak block reference tree (weak block reference Merkle tree, WBRMT), the fourth Merkle tree may also be referred to as a preposition Merkle tree (preposition Merkle tree, PMT), and the third Merkle tree may also be referred to as a content tree (content Merkle tree, CMT). It should be understood that the foregoing names are merely examples, and there may be other names. This is not limited in this application.

It should be noted that the first information may also be referred to as meta information, and a name of the first information is not limited in this application.

Optionally, that the first blockchain node processes the first information and obtains the block header of the first block may be implemented through a meta information processing interface (MetaMsgQ). The block header of the first block may be obtained by processing the first information through the meta information processing interface. It should be understood that an interface name is merely an example, and there may be another name.

Optionally, a corresponding method in which the first blockchain node determines the block type of the first block may be: The first blockchain node performs a hash operation on the block header of the first block, and determines the block type of the first block based on a result of the hash operation.

For example, a corresponding method in which the first blockchain node determines the block type of the first block based on the result of the hash operation may be: When the result of the hash operation is less than or equal to a first threshold, the first blockchain node determines that the block type of the first block is the first type. When the result of the hash operation is greater than a first threshold, and a first hash value is less than a second threshold, the first blockchain node determines that the block type of the first block is the second type, where the first threshold is less than the second threshold.

In the foregoing descriptions, when the result of the hash operation is equal to the first threshold, the block type of the first block is the first type. It should be understood that, when the result of the hash operation is equal to the first threshold, the block type of the first block may alternatively be the second type. Classification of a case of "equal to" is not limited in this application.

When the first blockchain node performs a hash operation on the first block, the first blockchain node may perform the hash operation for a plurality of times. For example, the first blockchain node selects different nonces (nonces) to perform the hash operation until a result of the hash operation is obtained. For example, the result of the hash operation may be a hash value obtained through final calculation. This is not limited in this application.

For example, assuming that the result of the hash operation is 256-bit (bit) data. When the first 74 bits of the result of the hash operation are 0s, it is determined that the first block is the first-type block. When the first 70 bits are 0s, and the 7 1^{st} bit to the 74^{th} bit are not 0, it is determined that the first block is the second-type block.

It should be noted that when both the first consensus and the second consensus are the proof-of-work consensus, the first blockchain node performs the hash operation, and determines the block type of the first block based on the result of the hash operation. When the first consensus and the second consensus are in another case, when determining the first block, the first blockchain node has known that a block in which block type needs to be determined, and only needs to determine the first block based on the determined block type. In this case, the first blockchain node does not perform the hash operation or an operation of determining the block type of the first block based on the result of the hash operation.

Optionally, a process in which the first blockchain node performs the hash operation when determining the block type of the first block may be implemented through a workload hash interface (PoWProQ). It should be understood that the foregoing interface name is merely an example, and there may be another name.

Optionally, the first block may be a block other than the 1^{st} block (namely, a genesis block) in the first blockchain. The genesis block may be generated in an initial stage of blockchain generation. For example, the system-initialized genesis block may be generated through an initialization (Initialize()) interface.

Step 302: The first blockchain node determines the first block based on the block type of the first block.

Optionally, step 302 may also be described as follows: The first blockchain node generates the first block based on the block type of the first block.

In an optional implementation, a corresponding method in which the first blockchain node determines the first block based on the block type of the first block may be: When the block type of the first block is the second type, the first block includes the transaction information and the first Merkle tree, where the first Merkle tree is determined based on the transaction information. When the block type of the first block is the first type, the first block includes one or more of the following information: the preposition block information of the first block, the second-type block reference information, or the second Merkle tree, where the second Merkle tree is determined based on the second-type block reference information.

The first blockchain node determines the first block based on the block type of the first block, and a part other than the block header in the first block is filled with content based on the block header of the first block and the block type of the first block.

It should be noted that a block type is not distinguished for an existing block, but content included in the second-type block is similar to content included in the existing block. Content included in the first-type block is different from the content included in the existing block, for example, as shown in the following Table 1.

**Table 1 Comparison of content of the first-type block and the existing block**

| Content of the existing block | Content of the first-type block |
|---|---|
| Necessary information such as preposition block information and a timestamp of a block | Necessary information such as the preposition block information and a timestamp of the first block |
| Transaction information | Transaction information (optional, which is not limited) |
| | Second-type block reference information |
| | Second Merkle tree |

It can be learned from the foregoing Table 1 that, compared with the content of the existing block, the second-type block reference information and the second Merkle tree are newly added to the first-type block. In this way, within time of the first-type block, the system may simultaneously link a plurality of referenced second-type blocks to a chain, to improve a throughput of a block/transaction per unit time.

Optionally, a process in which the first blockchain node determines the first block based on the block type of the first block may be implemented through a block filling interface (BlockFilingQ). It should be understood that the foregoing interface name is merely an example, and there may be another name.

Optionally, after determining the first block, the first blockchain node updates the first blockchain.

Step 303: The first blockchain node sends the first block to a second blockchain node, in other words, the second blockchain node receives the first block from the first blockchain node.

Optionally, the first blockchain node sends the first block to the second blockchain node in a broadcast manner.

Step 304: The second blockchain node determines the block type of the first block.

In a first possible case, when both the first consensus and the second consensus are the proof-of-work consensus, a corresponding method in which the second blockchain node determines the block type of the first block may be: The second blockchain node determines a hash value of the first block. When the hash value of the first block is less than or equal to a first threshold, the second blockchain node determines that the block type of the first block is the first type. When the hash value of the first block is greater than a first threshold, and a first hash value is less than a second threshold, the second blockchain node determines that the block type of the first block is the second type.

Similarly, "equal to" may also be classified into the case of the second type.

The hash value of the first block is a hash value of the block header of the first block.

In a second possible case, when the first consensus and the second consensus are consensus other than the proof-of-work consensus, the second blockchain node receives the block type of the first block from the first blockchain node, so that the second blockchain node can determine the block type of the first block. In other words, in this case, when broadcasting the first block, the first blockchain node also broadcasts the block type of the first block.

Step 305: The second blockchain node performs block verification on the first block based on the block type of the first block.

In an example, when the block type of the first block is the second type, that the second blockchain node performs block verification on the first block based on the block type of the first block may include one or more of the following:
verifying whether a proof of membership of the transaction information in the first block is correct;
verifying whether a transaction in the first block is valid;
verifying whether the first Merkle tree in the first block is correct; or
verifying whether the hash value of the block header of the first block is correct.

In an optional implementation, when the block type of the first block is the first type, that the second blockchain node performs block verification on the first block based on the block type of the first block may include one or more of the following:
verifying whether a proof of membership of the second-type block reference information in the first block is correct;
verifying whether a proof of membership of the block confirmation information in the first block is correct;
verifying whether a proof of membership of the preposition block of the first block is correct; or
verifying whether the hash value of the block header of the first block is correct.

Optionally, when the first consensus is the proof-of-work consensus, the second blockchain node may verify the first-type block in the foregoing verification method.

In another optional implementation, when the block type of the first block is the first type, that the second blockchain node performs block verification on the first block based on the block type of the first block, for example, may include the following: The second blockchain node verifies whether a second-type block a referenced by the first block is correct.

Optionally, when the first consensus is not the proof-of-work consensus, the second blockchain node may verify the first-type block in the foregoing verification method.

For example, the first-type block and the second-type block may be linked by using a cryptographic public-private key pair to establish a reference relationship (namely, an ownership relationship). Further, when verifying whether the second-type block referenced by the first block is correct, the second blockchain node may perform verification by using the cryptographic public-private key pair.

Optionally, a process in which the second blockchain node performs block verification on the first block may be implemented through a block verification interface (VerifyBlock()). It should be understood that the foregoing interface name is merely an example, and there may be another name.

Step 306: After block verification succeeds, the second blockchain node updates the first blockchain.

In an optional implementation, when the block type of the first block is the second type, after block verification succeeds, the second blockchain node stores the first block in a local second-type block pool, where a second-type block included in the second-type block pool is not referenced by any first-type block.

It should be noted that the first blockchain node determines the transaction information in a transaction pool before determining the first block, where the transaction information corresponds to the first blockchain.

Based on the foregoing descriptions, a generation procedure of the first blockchain may be briefly summarized as a procedure shown in FIG. 5. For example, the first blockchain node determines the transaction information in the transaction pool. Then, the first blockchain node determines the first block according to the method in step 301 and step 302. Then, the first blockchain node sends the first block to the second blockchain node. Finally, the second blockchain node performs block verification on the first block according to the method in step 304 to step 306.

It should be noted that after the first blockchain node broadcasts the first block, in addition to the second blockchain node, another blockchain node may receive the first block and perform block verification. It should be understood that an operation of the another blockchain node is the same as an operation of the second blockchain node. For details, refer to the operation of the second blockchain node. The details are not described herein again.

According to the blockchain generation method provided in embodiments of this application, a blockchain may include at least one first-type block and at least one second-type block, to improve scalability of the blockchain and a transaction throughput of the blockchain, and further improve performance of the blockchain.

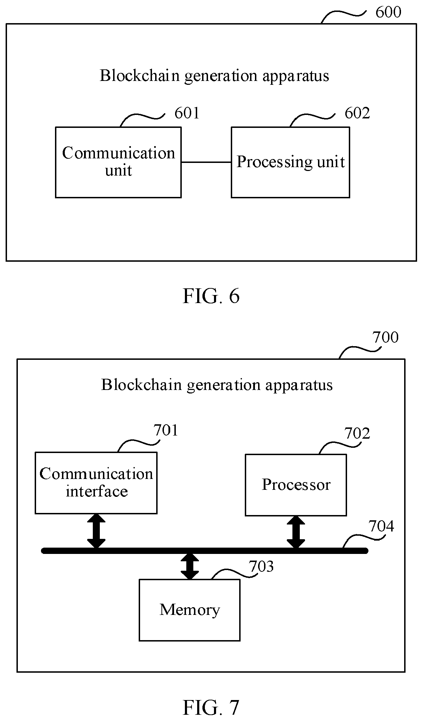

Based on the foregoing embodiments, an embodiment of this application further provides a blockchain generation apparatus. Refer to FIG. 6. The blockchain generation apparatus 600 may include a communication unit 601 and a processing unit 602. The communication unit 601 is used by the blockchain generation apparatus 600 to receive information (a message or data) or send information (a message or data), for example, send and/or receive a block. The processing unit 602 is configured to control and manage an action of the blockchain generation apparatus 600. The processing unit 602 may further control a step performed by the communication unit 601.

For example, the blockchain generation apparatus 600 may be the first blockchain node in the foregoing embodiments, or a processor, a chip, a chip system, a functional module, or the like in the first blockchain node. Alternatively, the blockchain generation apparatus 600 may be the second blockchain node in the foregoing embodiments, or a processor, a chip, a chip system, a functional module, or the like in the second blockchain node.

In an embodiment, when the blockchain generation apparatus 600 is configured to implement a function of the first blockchain node in the embodiment shown in FIG. 3,
the processing unit 602 is configured to: determine a block type of a first block, and determine the first block based on the block type of the first block, where the block type is a first type or a second type; and the communication unit 601 is configured to send the first block to a second blockchain node. The first blockchain node and the second blockchain node are configured to maintain a first blockchain, and the first blockchain includes at least one first-type block and at least one second-type block.

In an optional implementation, the processing unit 602 is further configured to: determine first information, and obtain a block header of the first block based on the first information. The first information includes one or more of the following information: preposition block information of the first block, second-type block reference information, block confirmation information, transaction information, or a block confirmation period.

For example, when obtaining the block header of the first block based on the first information, the processing unit 602 is configured to: perform one or more of the following processing on the first information: generating a first Merkle tree based on the transaction information or generating a second Merkle tree based on the second-type block reference information; perform a hash operation on at least one of the first Merkle tree, the preposition block information, or the second Merkle tree, to obtain a third Merkle tree; and obtain the block header of the first block based on a root of the third Merkle tree.

Optionally, when determining the block type of the first block, the processing unit 602 is configured to: perform a hash operation on the block header of the first block; and determine the block type of the first block based on a result of the hash operation.

In an example, when determining the block type of the first block based on the result of the hash operation, the processing unit 602 is configured to: when the result of the hash operation is less than or equal to a first threshold, determine that the block type of the first block is the first type; or when the result of the hash operation is greater than a first threshold, and a first hash value is less than a second threshold, determine that the block type of the first block is the second type, where the first threshold is less than the second threshold.

In a possible manner, when determining the first block based on the block type of the first block, the processing unit 602 is configured to: when the block type of the first block is the second type, the first block includes the transaction information and the first Merkle tree, where the first Merkle tree is determined based on the transaction information; or when the block type of the first block is the first type, the first block includes one or more of the following information: the preposition block information of the first block, the second-type block reference information, or the second Merkle tree, where the second Merkle tree is determined based on the second-type block reference information.

In an optional implementation, the first-type block uses first consensus, the second-type block uses second consensus, and the first-type block references the second-type block.

In another embodiment, when the blockchain generation apparatus 600 is configured to implement a function of the second blockchain node in the embodiment shown in FIG. 3,
the communication unit 601 is configured to receive a first block from a first blockchain node; and the processing unit 602 is configured to: determine a block type of the first block, where the block type is a first type or a second type; perform block verification on the first block based on the block type of the first block; and after block verification succeeds, update a first blockchain, where the first blockchain node and the second blockchain node are configured to maintain the first blockchain, and the first blockchain includes at least one first-type block and at least one second-type block.

In an optional implementation, when determining the block type of the first block, the processing unit 602 may be configured to: determine a hash value of the first block; and when the hash value of the first block is less than or equal to a first threshold, determine that the block type of the first block is the first type; or when the hash value of the first block is greater than a first threshold, and a first hash value is less than a second threshold, determine that the block type of the first block is the second type, where the first threshold is less than the second threshold.

In another optional implementation, the communication unit 601 is further configured to receive the block type of the first block from the first blockchain node. When determining the block type of the first block, the processing unit 602 may be configured to determine the block type of the first block based on the block type of the first block received by the communication unit 601.

In some examples, the communication unit 601 may be an input/output interface.

In an example, when the block type of the first block is the second type, when performing block verification on the first block based on the block type of the first block, the processing unit 602 may be configured to perform one or more of the following:
verifying whether a proof of membership of transaction information in the first block is correct;
verifying whether a transaction in the first block is valid;
verifying whether a first Merkle tree in the first block is correct; or
verifying whether a hash value of a block header of the first block is correct.

In another example, when the block type of the first block is the first type, when performing block verification on the first block based on the block type of the first block, the processing unit 602 may be configured to perform one or more of the following:
verifying whether a proof of membership of second-type block reference information in the first block is correct;
verifying whether a proof of membership of block confirmation information in the first block is correct;
verifying whether a proof of membership of a preposition block of the first block is correct; or
verifying whether a hash value of a block header of the first block is correct.

In still another example, when the block type of the first block is the first type, when performing block verification on the first block based on the block type of the first block, the processing unit 602 may be configured to: verify whether a second-type block referenced by the first block is correct.

Optionally, when the block type of the first block is the second type, the processing unit 602 is further configured to: after block verification succeeds, store the first block in a local second-type block pool, where a second-type block included in the second-type block pool is not referenced by any first-type block.

It should be noted that, in embodiments of this application, division into the units is an example, and is merely logical function division. During actual implementation, another division manner may be used. Functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a blockchain generation apparatus. Refer to FIG. 7. The blockchain generation apparatus 700 may include a communication interface 701 and a processor 702. Optionally, the blockchain generation apparatus 700 may further include a memory 703. The memory 703 may be disposed inside the blockchain generation apparatus 700, or may be disposed outside the blockchain generation apparatus 700. The processor 702 may control the communication interface 701 to receive and send information or data, for example, a block. The processor 702 and the memory 703 may alternatively be integrated together.

The processor 702 may be a central processing unit (central processing unit, CPU), a network processor (network processor, NP), or a combination of the CPU and the NP. The processor 702 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), generic array logic (generic array logic, GAL), or any combination thereof.

The communication interface 701, the processor 702, and the memory 703 are connected to each other. Optionally, the communication interface 701, the processor 702, and the memory 703 are connected to each other through a bus 704. The bus 704 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used for representation in FIG. 7, but this does not mean that there is only one bus or only one type of bus.

In an optional implementation, the memory 703 is configured to store a program and the like. The program may include program code, and the program code includes computer operating instructions. The memory 703 may include a RAM, and may further include a non-volatile memory (non-volatile memory), for example, one or more disk memories. The processor 702 executes the application program stored in the memory 703, to implement the foregoing functions, and further implement a function of the blockchain generation apparatus 700.

For example, the blockchain generation apparatus 700 may be the first blockchain node in the foregoing embodiments, or may be the second blockchain node in the foregoing embodiments.

In an embodiment, when the blockchain generation apparatus 700 implements a function of the first blockchain node in the embodiment shown in FIG. 3, the communication interface 701 may implement receiving and sending operations performed by the first blockchain node in the embodiment shown in FIG. 3. The processor 702 may implement an operation other than the receiving and sending operations performed by the first blockchain node in the embodiment shown in FIG. 3. For related detailed descriptions, refer to related descriptions in the embodiment shown in FIG. 3. Details are not described herein again.

In another embodiment, when the blockchain generation apparatus 700 implements a function of the second blockchain node in the embodiment shown in FIG. 3, the communication interface 701 may implement receiving and sending operations performed by the second blockchain node in the embodiment shown in FIG. 3. The processor 702 may implement an operation other than the receiving and sending operations performed by the second blockchain node in the embodiment shown in FIG. 3. For related detailed descriptions, refer to related descriptions in the embodiment shown in FIG. 3. Details are not described herein again.

Based on the foregoing embodiments, an embodiment of this application provides a system. The system may include the first blockchain node, the second blockchain node, and the like in the foregoing embodiments.

An embodiment of this application further provides a computer-readable storage medium. The computer-readable storage medium is configured to store a computer program. When the computer program is executed by a computer, the computer may implement the blockchain generation method provided in the foregoing method embodiment.

An embodiment of this application further provides a computer program product. The computer program product is configured to store a computer program. When the computer program is executed by a computer, the computer may implement the blockchain generation method provided in the foregoing method embodiment.

An embodiment of this application further provides a chip, including a processor. The processor is coupled to a memory, and is configured to invoke a program in the memory, so that the chip implements the blockchain generation method provided in the foregoing method embodiment.

An embodiment of this application further provides a chip. The chip is coupled to a memory, and the chip is configured to implement the blockchain generation method provided in the foregoing method embodiment. Alternatively, the memory may be integrated into the chip.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that, a person skilled in the art can make various modifications and variations to this application without departing from the scope of this application. In this way, this application is intended to cover these modifications and variations of this application provided that they fall within the scope of the claims of this application and their equivalent technologies.

## Claims

1. A blockchain generation method, comprising:
determining, by a first blockchain node, a block type of a first block, wherein the block type is a first type or a second type;
determining, by the first blockchain node, the first block based on the block type of the first block; and
sending, by the first blockchain node, the first block to a second blockchain node, wherein the first blockchain node and the second blockchain node are configured to maintain a first blockchain, and the first blockchain comprises at least one first-type block and at least one second-type block.

2. The method according to claim 1, wherein the method further comprises:
determining, by the first blockchain node, first information, wherein the first information comprises one or more of the following information: preposition block information of the first block, second-type block reference information, block confirmation information, transaction information, or a block confirmation period; and
obtaining, by the first blockchain node, a block header of the first block based on the first information.

3. The method according to claim 2, wherein the obtaining, by the first blockchain node, a block header of the first block based on the first information comprises:
performing, by the first blockchain node, one or more of the following processing on the first information:
generating a first Merkle tree based on the transaction information or generating a second Merkle tree based on the second-type block reference information;
performing, by the first blockchain node, a hash operation on at least one of the first Merkle tree, the preposition block information, or the second Merkle tree, to obtain a third Merkle tree; and
obtaining, by the first blockchain node, the block header of the first block based on a root of the third Merkle tree.

4. The method according to claim 2 or 3, wherein the determining, by a first blockchain node, a block type of a first block comprises:
performing, by the first blockchain node, a hash operation on the block header of the first block; and
determining, by the first blockchain node, the block type of the first block based on a result of the hash operation.

5. The method according to claim 4, wherein the determining, by the first blockchain node, the block type of the first block based on a result of the hash operation comprises:
when the result of the hash operation is less than or equal to a first threshold, determining, by the first blockchain node, that the block type of the first block is the first type; or
when the result of the hash operation is greater than a first threshold, and a first hash value is less than a second threshold, determining, by the first blockchain node, that the block type of the first block is the second type, wherein
the first threshold is less than the second threshold.

6. The method according to any one of claims 2 to 5, wherein the determining, by the first blockchain node, the first block based on the block type of the first block comprises:
when the block type of the first block is the second type, the first block comprises the transaction information and the first Merkle tree, wherein the first Merkle tree is determined based on the transaction information; or
when the block type of the first block is the first type, the first block comprises one or more of the following information: the preposition block information of the first block, the second-type block reference information, or the second Merkle tree, wherein the second Merkle tree is determined based on the second-type block reference information.

7. The method according to any one of claims 1 to 6, wherein the first-type block uses first consensus, the second-type block uses second consensus, and the first-type block references the second-type block.

8. A blockchain generation method, comprising:
receiving, by a second blockchain node, a first block from a first blockchain node;
determining, by the second blockchain node, a block type of the first block, wherein the block type is a first type or a second type;
performing, by the second blockchain node, block verification on the first block based on the block type of the first block; and
after block verification succeeds, updating, by the second blockchain node, a first blockchain, wherein the first blockchain node and the second blockchain node are configured to maintain the first blockchain, and the first blockchain comprises at least one first-type block and at least one second-type block.

9. The method according to claim 8, wherein the determining, by the second blockchain node, a block type of the first block comprises:
determining, by the second blockchain node, a hash value of the first block; and
when the hash value of the first block is less than or equal to a first threshold, determining, by the second blockchain node, that the block type of the first block is the first type; or
when the hash value of the first block is greater than a first threshold, and a first hash value is less than a second threshold, determining, by the second blockchain node, that the block type of the first block is the second type, wherein
the first threshold is less than the second threshold.

10. The method according to claim 8, wherein the determining, by the second blockchain node, a block type of the first block comprises:
receiving, by the second blockchain node, the block type of the first block from the first blockchain node.

11. The method according to any one of claims 8 to 10, wherein when the block type of the first block is the second type, the performing, by the second blockchain node, block verification on the first block based on the block type of the first block comprises one or more of the following:
verifying whether a proof of membership of transaction information in the first block is correct;
verifying whether a transaction in the first block is valid;
verifying whether a first Merkle tree in the first block is correct; or
verifying whether a hash value of a block header of the first block is correct.

12. The method according to claim 8 or 9, wherein when the block type of the first block is the first type, the performing, by the second blockchain node, block verification on the first block based on the block type of the first block comprises one or more of the following:
verifying whether a proof of membership of second-type block reference information in the first block is correct;
verifying whether a proof of membership of block confirmation information in the first block is correct;
verifying whether a proof of membership of a preposition block of the first block is correct; or
verifying whether a hash value of a block header of the first block is correct.

13. The method according to claim 8 or 10, wherein when the block type of the first block is the first type, the performing, by the second blockchain node, block verification on the first block based on the block type of the first block comprises:
verifying, by the second blockchain node, whether a second-type block referenced by the first block is correct.

14. The method according to any one of claims 8 to 13, wherein when the block type of the first block is the second type, the method further comprises:
after block verification succeeds, storing, by the second blockchain node, the first block in a local second-type block pool, wherein a second-type block comprised in the second-type block pool is not referenced by any first-type block.

15. A blockchain generation apparatus, applied to a first blockchain node, comprising:
a processing unit, configured to: determine a block type of a first block, wherein the block type is a first type or a second type, and determine the first block based on the block type of the first block; and
a communication unit, configured to send the first block to a second blockchain node, wherein the first blockchain node and the second blockchain node are configured to maintain a first blockchain, and the first blockchain comprises at least one first-type block and at least one second-type block.

16. The apparatus according to claim 15, wherein the processing unit is further configured to:
determine first information, wherein the first information comprises one or more of the following information: preposition block information of the first block, second-type block reference information, block confirmation information, transaction information, or a block confirmation period; and
obtain a block header of the first block based on the first information.

17. The apparatus according to claim 16, wherein when obtaining the block header of the first block based on the first information, the processing unit is configured to:
perform one or more of the following processing on the first information: generating a first Merkle tree based on the transaction information or generating a second Merkle tree based on the second-type block reference information;
perform a hash operation on at least one of the first Merkle tree, the preposition block information, or the second Merkle tree, to obtain a third Merkle tree; and
obtain the block header of the first block based on a root of the third Merkle tree.

18. The apparatus according to claim 16 or 17, wherein when determining the block type of the first block, the processing unit is configured to:
perform a hash operation on the block header of the first block; and
determine the block type of the first block based on a result of the hash operation.

19. The apparatus according to claim 18, wherein when determining the block type of the first block based on the result of the hash operation, the processing unit is configured to:
when the result of the hash operation is less than or equal to a first threshold, determine that the block type of the first block is the first type; or
when the result of the hash operation is greater than a first threshold, and a first hash value is less than a second threshold, determine that the block type of the first block is the second type, wherein
the first threshold is less than the second threshold.

20. The apparatus according to any one of claims 16 to 19, wherein when determining the first block based on the block type of the first block, the processing unit is configured to:
when the block type of the first block is the second type, the first block comprises the transaction information and the first Merkle tree, wherein the first Merkle tree is determined based on the transaction information; or
when the block type of the first block is the first type, the first block comprises one or more of the following information: the preposition block information of the first block, the second-type block reference information, or the second Merkle tree, wherein the second Merkle tree is determined based on the second-type block reference information.

21. The apparatus according to any one of claims 15 to 20, wherein the first-type block uses first consensus, the second-type block uses second consensus, and the first-type block references the second-type block.

22. A blockchain generation apparatus, applied to a second blockchain node, comprising:
a communication unit, configured to receive a first block from a first blockchain node; and
a processing unit, configured to: determine a block type of the first block, wherein the block type is a first type or a second type; perform block verification on the first block based on the block type of the first block; and after block verification succeeds, update a first blockchain, wherein the first blockchain node and the second blockchain node are configured to maintain the first blockchain, and the first blockchain comprises at least one first-type block and at least one second-type block.

23. The apparatus according to claim 22, wherein when determining the block type of the first block, the processing unit is configured to:
determine a hash value of the first block; and
when the hash value of the first block is less than or equal to a first threshold, determine that the block type of the first block is the first type; or
when the hash value of the first block is greater than a first threshold, and a first hash value is less than a second threshold, determine that the block type of the first block is the second type, wherein
the first threshold is less than the second threshold.

24. The apparatus according to claim 22, wherein the communication unit is further configured to:
receive the block type of the first block from the first blockchain node; and
when determining the block type of the first block, the processing unit is configured to:
determine the block type of the first block based on the block type of the first block received by the communication unit.

25. The apparatus according to any one of claims 22 to 24, wherein when the block type of the first block is the second type, when performing block verification on the first block based on the block type of the first block, the processing unit is configured to perform one or more of the following:
verifying whether a proof of membership of transaction information in the first block is correct;
verifying whether a transaction in the first block is valid;
verifying whether a first Merkle tree in the first block is correct; or
verifying whether a hash value of a block header of the first block is correct.

26. The apparatus according to claim 22 or 23, wherein when the block type of the first block is the first type, when performing block verification on the first block based on the block type of the first block, the processing unit is configured to perform one or more of the following:
verifying whether a proof of membership of second-type block reference information in the first block is correct;
verifying whether a proof of membership of block confirmation information in the first block is correct;
verifying whether a proof of membership of a preposition block of the first block is correct; or
verifying whether a hash value of a block header of the first block is correct.

27. The apparatus according to claim 22 or 24, wherein when the block type of the first block is the first type, when performing block verification on the first block based on the block type of the first block, the processing unit is configured to:
verify whether a second-type block referenced by the first block is correct.

28. The apparatus according to any one of claims 22 to 27, wherein when the block type of the first block is the second type, the processing unit is further configured to:
after block verification succeeds, store the first block in a local second-type block pool, wherein a second-type block comprised in the second-type block pool is not referenced by any first-type block.

29. Ablockchain generation apparatus, comprising a memory and a processor, wherein
the memory is configured to store computer instructions; and
the processor is coupled to the memory, and is configured to invoke the computer instructions in the memory, to enable the blockchain generation apparatus to perform the method according to any one of claims 1 to 7.

30. Ablockchain generation apparatus, comprising a memory and a processor, wherein
the memory is configured to store computer instructions; and
the processor is coupled to the memory, and is configured to invoke the computer instructions in the memory, to enable the blockchain generation apparatus to perform the method according to any one of claims 8 to 14.

31. The apparatus according to any one of claims 15 to 30, wherein the apparatus is a chip.

32. A computer-readable storage medium, wherein the computer-readable storage medium stores computer-executable instructions, and when the computer-executable instructions are invoked by a computer, the computer is enabled to perform the method according to any one of claims 1 to 7, or perform the method according to any one of claims 8 to 14.

33. A computer program product comprising instructions, wherein when the computer program product runs on a computer, the computer is enabled to perform the method according to any one of claims 1 to 7, or perform the method according to any one of claims 8 to 14.
